(19) Europäisches Patentamt
European Patent Office
Office européen des brevets

(11) Publication number: **0 131 829**
**A1**

(12) **EUROPEAN PATENT APPLICATION**

(21) Application number: 84107618.5

(22) Date of filing: 30.06.84

(51) Int. Cl.⁴: **H 01 M 10/36**
H 01 M 8/08, C 25 B 3/00
H 01 B 1/12, H 01 L 29/28

(30) Priority: 06.07.83 US 511338

(43) Date of publication of application: 23.01.85 Bulletin 85/4

(84) Designated Contracting States: AT BE CH DE FR GB IT LI NL SE

(71) Applicant: UNIVERSITY PATENTS, INC.
537 Newtown Avenue P.O. Box 6080
Norwalk, CT 06852(US)

(72) Inventor: MacDiarmid, Alan G.
635 Drexel Avenue
Drexel Hill Pennsylvania 19026(US)

(72) Inventor: Mammone, Robert J.
1134 North Drive
South Plainfield New Jersey 07080(US)

(74) Representative: von Günner, Kurt, Dr.
c/o BASF Aktiengesellschaft Carl-Bosch-Strasse 38
D-6700 Ludwigshafen(DE)

(54) **Polymer batteries and fuel cells having protic solvents and methods for their construction and use.**

(57) Secondary batteries are provided having at least one electrode which comprises a conjugated polymer having conjugated unsaturation along the main backbone chain thereof, said polymer being electrochemically oxidizable to a p-type doped material and electrochemically reducible to an n-type doped material. The battery is provided with an electrolyte which is protic in nature and which contains at least one ionic dopant capable of doping the polymer to a conductive state in the electrolyte. Methods of reversibly doping certain conjugated polymers in protic media are also disclosed. Fuel cells and electrolytic cells are also provided employing the protic doping systems and cells disclosed.

FIG.1

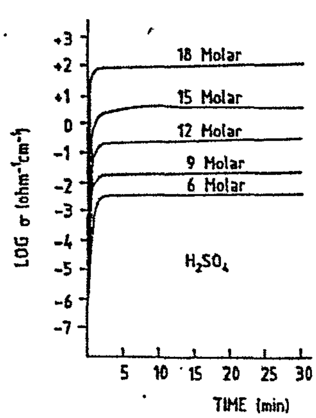


EP 0 131 829 A1

# POLYMER BATTERIES AND FUEL CELLS HAVING PROTIC SOLVENTS AND METHODS FOR THEIR CONSTRUCTION AND USE

Certain aspects of the invention described herein were made during the course of work performed under grants or awards from the Office of Naval Research and from the Defense Advanced Research Project Agency through a grant monitored by the Office of Naval Research.

## FIELD OF THE INVENTION

This invention relates to electrochemical doping procedures for the selective modification of the electrical conductivity properties of certain conjugated polymers, and to the application of such procedures to the design of novel, lightweight, high energy density and high power density secondary (reversible) batteries. This invention is also directed to fuel cells wherein simultaneous electrochemical reduction of electrochemically reducible species and electrochemical oxidation of electrochemically oxidizable species takes place at different electrodes, with concomitant generation of electric current together with methods for such generation. Reverse reactions, electrolysis, are also contemplated hereby. All of the foregoing embodiments of this invention employ conjugated polymers having conjugated unsaturation along a main backbone chain thereof as either or both of anodic and cathodic means in electrolytic cells, batteries and/or fuel cells. Electrolytes are also employed in connection with the embodiments of this invention, which electrolytes comprise solvents which are protic in nature, that is, which are able to donate protons readily. Examples of such solvents include water, alcohols, amines, and other solvents well known to those skilled in the art.

## BACKGROUND OF THE INVENTION

It has recently been found that acetylene polymers, such as polyacetylene, can be chemically doped in a controlled manner

with electron acceptor and/or electron donor dopants to produce a whole family of p-type and n-type electrically conducting doped acetylene polymers whose room temperature electrical conductivity may be preselected over the entire range characteristic of semiconductor behavior and into the range characteristic of metallic behavior. Such doping procedures and the resulting doped acetylene polymers are described and claimed in the commonly assigned U. S. Patent No. 4,222,903, of Alan J. Heeger, Alan J. MacDiarmid, Chwan K. Chiang, and Hideki Shirakawa, issued September 16, 1980; and in the commonly assigned U. S. Patent No. 4,204,216, of Alan J. Heeger, Alan G. MacDiarmid, Chwan K. Chiang, and Shek-Chung Gau, issued May 20, 1980; both of which patents are incorporated herein by reference. As described in said Heeger, et al. patents, a p-type material is obtained with electron acceptor dopants, and an n-type material is obtained with electron donor dopants. The resulting room temperature electrical conductivity of the doped acetylene polymer increases with increasing degree of doping up to a certain point where the maximum conductivity is obtained for any given dopant. Such maximum conductivity generally is obtained at a degree of doping not greater than about 0.30 mole of dopant per -CH- unit of polyacetylene.

The doping procedures described in said Heeger, et al. patents involve merely contacting the acetylene polymer with the dopant, which may be either in the vapor phase or in an aprotic solvent; uptake of the dopant into the acetylene polymer occurs by chemical reaction and/or charge transfer to a degree proportional with both the dopant concentration and the contacting period. The concentration and contacting period can be coordinated and controlled so that the corresponding degree of doping will be such as to provide the resulting doped acetylene polymer with a preselected room temperature conductivity.

Doped acetylene polymers together with other polymers having conjugated unsaturation in a backbone chain thereof constitute one class of recently developed molecular solids exhibiting relatively high levels of electrical conductivity.

Several other molecular solids have previously been investigated as electrode materials in attempts at improved battery design. For example, U. S. Patent No. 3,660,163 issued May 2, 1972 to Moser; and Schneider, et al., Proc. Int. Power Sources Conf., 651-659 (1974), describe the use of a charge transfer complex of poly-2-vinylpyridine with excess iodine as a cathode material in a solid-state lithium-iodide primary battery employing lithium iodide as a solid electrolyte.

A recent article by Yoshimura, appearing in Molecular Metals, William E. Hatfield, ed., NATO Conference Series, Series VI: Materials Science, pp. 471-489 (1978), at pages 474-476, refers to the above described prior art solid-state lithium-iodine primary battery constructed with poly-2-vinylpyridine-iodine charge transfer complex cathode materials, and broadly speculates that a number of the molecular metals, including doped polyacetylene, might possibly find similar utility as cathode materials in battery design. No details are provided in regard to the possible construction or mode of operation of such hypothetical batteries, however. Furthermore, the possibility of doped acetylene or other conjugated polymers being employed as anode materials or as one or both of the electrode materials in a secondary battery construction, i.e., in batteries which are capable of being charged and discharged over many cycles, is not suggested in this article.

In the aforementioned Moser U. S. Patent No. 3,660,163, a number of organic donor components in addition to polyvinylpyridine are listed as being suitable for forming the iodine charge transfer complex cathode material. The only one of these many materials listed in the patent which happens to be a conjugated polymer is polypyrrole. Moser attaches no particular significance to polypyrrole, either as being a conjugated polymer or as having any unique electrochemical properties in either its uncomplexed or iodine-complexed form, which might set it apart from the many other organic donor components listed therein. There is no appreciation in the Moser patent that doped polypyrrole, or any other doped

conjugated polymer, could be used as one or both of the electrode materials in a secondary battery construction.

In commonly assigned U. S. Patent 4,321,114, issued March 23, 1982, in the name of Alan G. MacDiarmid, Alan J. Heeger, and Paul J. Nigrey, and commonly assigned Application Serial No. 220,496, filed March 11, 1980, in the name of Alan G. MacDiarmid, Alan J. Heeger, and Paul J. Nigrey, which application is a continuation-in-part of the application leading to U. S. Patent 4,321,114, is disclosed electrochemical doping of conjugated polymers. Thus, polymers such as polyacetylene and polyphenylenes are disclosed to be reversibly, electrochemically dopable by a variety of dopant species in aprotic solvents. Further, secondary, reversible batteries are also disclosed as being able to be constructed from such materials. Secondary batteries are disclosed as being constructed from conjugated polymers having conjugated unsaturation along a main backbone chain thereof, said polymer being electrochemically reducible to an n-type doped material and electrochemically oxidizable to a p-type doped material in non-aqueous electrolytes comprising a compound which is ionizable into one or more anionic or cationic dopant species capable of doping the polymer to one of the oxidized or reduced states.

British Patent 1,216,549 - Josefowicz, together with French Patent 1,519,729, Jozefowicz, and "Conductivity of High Polymer Compounds in Solid State", Josefowicz, Fast Ion Transport in Solids - Solid State Batteries and Devices, Proceedings of a NATO sponsored Advanced Study Institute, Belgirate, Italy, pp. 623-636 (1973), discloses the electrochemical doping of certain polymers, especially polyaniline, in protic media, however the polymers disclosed are not electrochemically dopable to both p and n states.

None of the foregoing are believed to anticipate or render obvious, either alone or in combination, this novel invention as reflected by the claims.

SUMMARY OF THE INVENTION

It is an object of this invention to provide secondary batteries having one or more electrodes comprising a conjugated polymer having conjugated unsaturation along a main backbone chain thereof, said polymer being electrochemically oxidizable to a p-type doped material and electrochemically reducible to an n-type doped material, and an electrolyte comprising a protic solvent together with at least one ionic dopant capable of doping the polymer to a conductive state in the electrolyte.

Another object is to provide secondary batteries having aqueous, alcoholic, or ammoniacal electrolytes.

A further object is to provide secondary batteries comprising polyacetylene or polyphenylene electrode materials and protic electrolytes.

Another object is to provide chemical methods for doping certain conjugated polymers.

Secondary batteries wherein protic solvent-based electrolytes are employed which are capable of doping conjugated polymers comprising one or more electrodes of the battery to a conductive state are also contemplated hereby.

Electrochemical methods for modifying the electrical conductivity of organic polymers are also principal objects of this invention.

It is a further object to provide methods for reversibly doping certain conjugated polymers in protic solvents, especially aqueous solvents.

It is yet another object of the present invention to provide electrochemical fuel cells capable of simultaneously oxidizing an ozidizable species and reducing a reducible species at different electrodes with the concomitant generation of electric current.

Another object of this invention is to provide electrochemical fuel cells employing certain conjugated polymers which are dopable with dopant species to a conducting state for the catalytic oxidation-reduction of suitable oxidizable and reducible species.

Yet another object of this invention is to provide methods for the electrochemical generation of electric current through the conjugated polymer-catalyzed oxidation-reduction of suitable oxidizable and reducible species in protic, especially aqueous, media.

A further object of the invention provides electrolysis of chemical species into their constituent elements or compounds by the application of current to suitable electrochemical cells employing conjugated polymers as catalyst electrodes.

Yet another object is to provide methods for electrorefining of metals.

Further objects will be apparent to those of ordinary skill in the art from a review of the present specification together with those materials which have been incorporated herein by reference.

The foregoing objects and other objects are achieved through the employment of certain conjugated polymers in protic electrolytic media. Similarly, certain electrochemical doping procedures are employed in order to facilitate attainment of the foregoing objects. Secondary batteries may be produced having good reversibility, life times, power densities, energy densities, and overall coulombic efficiency comprising an anode, a cathode, and an electrolyte. One or both of the anode and cathode comprises a conjugated polymer having conjugated unsaturation along a main backbone chain thereof, said polymer being electrochemically oxidizable to a p-type doped material and electrochemically reducible to an n-type doped material. The electrolyte comprises a protic solvent and at least one ionic dopant capable of doping the polymer to a conductive state in the electrolyte. The foregoing secondary battery may be "charged" by passing current through the cell to effect doping of the conjugated polymer to a more highly conducting state in a reversible fashion. Reversing this process -discharge- provides electric current and returns the polymer to a less highly doped state.

In accordance with the present invention, an electrochemical fuel cell may be provided comprising an

electrolyte, electrochemically oxidizable fuel, an electrochemically reducible oxidizing agent and catalyst electrode means in contact with the electrolyte comprising a conjugated polymer having conjugated unsaturation along a main backbone chain thereof, said polymer being electrochemically oxidizable to a p-type doped material and electrochemically reducible to an n-type doped material. The electrolyte comprises a protic solvent, and at least one ionic dopant capable of doping the polymer to a conducting state in the electrode. Second electrode means in contact with the electrolyte is also provided for current collection and other purposes. The foregoing electrochemical fuel cell may be employed for the electrochemical generation of electric current by withdrawing current from the fuel cell to effect at least a partial electrochemical oxidation of the fuel and at least a partial electrochemical reduction of the oxidizing agent. The foregoing fuel cell may likely also be operated in "reverse" as an electrolysis cell. Thus, an electrical over-potential may be applied to the catalyst and second electrodes of the electrochemical fuel cell as described to cause electrolysis of the oxidized and reduced materials back into their oxidizable and reducible forms. In accordance with a preferred embodiment one or both of the fuel and oxidizing agents is a gas.

## BRIEF DESCRIPTION OF THE DRAWINGS

Figures 1 through 4 depict the sponteneous chemical doping of polyacetylene in aqueous acid solutions in accordance with certain of the Examples.

## DESCRIPTION OF CERTAIN PREFERRED EMBODIMENTS

As used herein, the term "dopant" or "ionic dopant" for a polymer refers to an ionic species which is capable of associating with the polymer to permit substantial addition or withdrawal of electric charge to/from the polymer and to permit modification of the electrical conductivity of the polymer. The dopant, as used herein, therefore may be viewed as an ionic species which provides the counterionic presence in a polymer

necessary for the establishment of conductive properties therein. As will be readily appreciated by those skilled in the art, ionic dopants are generally associated with moieties having opposite electrical charge, i.e. in compounds, especially as dissociable salts.

In the case of chemical doping of a polymer, the electrical modification of the polymer, i.e. the addition or withdrawal of electrons, is accomplished by contacting the polymer with a chemical species capable of participating in an oxidation-reduction, i.e. redox, reaction with the polymer. In such a case, the redox-participating species may or may not also be the source of dopant ions for maintaining electrical neutrality in the polymer. In the case where a single chemical species performs both functions, it is possible to confuse the roles. A species which is a dopant in accordance with the present definition will experience no change in its oxidation state upon doping. A species which participates in a redox reaction will, of course, experience an alteration in oxidization state on account of that participation. Different molecules of the same, original species or, indeed, the same molecules may perform both functions, i.e. serve as redox participant and as dopant ion. The dopant ion must not, however, react irreversibly with the oxidized or reduced polymer.

As used herein, the phrase "capable of doping" as applied to a dopant or dopant ion refers to the ability of the dopant to associate with the material being doped, e.g. the polymer, to permit the addition or withdrawal of charge and the concomitant modification of conductivity in the material by ensuring electrical neutrality.

As used herein, a "conductive state" as applied to a material such as a polymer, refers to a state of the material in which electrical conductivity as measured in $ohm^{-1}cm^{-1}$ is substantially increased over the native state of the material such as, for example, by several orders of magnitude. Those skilled in the art will appreciate that a practical definition of "conductive state" may vary depending upon the

proposed application of the material under consideration and that it will include both semiconducting and metallic regimes. Useful "conductive states" may include states having conductivities above about $10^{-5} ohm^{-1} cm^{-1}$. For common battery uses, conductivities above about 1 $ohm^{-1} cm^{-1}$ are most desired.

As used herein with respect to a secondary battery, "anode" refers to the situs of oxidation and "cathode" refers to the situs of reduction of the battery in the discharging mode, i.e., in the charged battery.

In order to appreciate the unexpected nature of the materials and processes described herein, it is desirable to be familiar with the effects of gaseous oxygen, liquid water, and air on the conductivity of neutral polyacetylene and p-doped, i.e. partially oxidized, polyacetylene. The effect of a mixture of the vapors of an oxidizing acid and water on polyacetylene should also be understood.

Gaseous oxygen will very slightly reversibly oxidize polyacetylene, increasing its conductivity from about $10^{-9} ohm^{-1} cm^{-1}$ to about $10^{-8} ohm^{-1} cm^{-1}$. This oxidation is attended by an irreversible chemical reaction, however. The $O_2$ combines chemically with the polyacetylene with comcomitant, permanent loss of conductivity after about five minutes of exposure. The conductivity drops to about $10^{-14} ohm^{-1} cm^{-1}$ after about 17 hours of exposure. See "Kinetics of Doping and Degradation of Polyacetylene by Oxygen", Pochan et al., Macromolecules, Vol. 14, pp. 110-114 (1981); "Oxygen Doping of Polyacetylene", Pochan et al., J. Polymer Sci., Polymer Letters Ed., Vol. 18, pp. 447-451 (1980); "Effects of Oxidation on $I_2$ Doping of Trans-Polyacetylene as Studied via E.S.R. and Conductivity Measurements", Pochan et al., Polymer, Vol. 23, pp. 439-444 (1982); "Organic Metals and Semiconductors: The Chemistry of Polyacetylene, $(CH)_x$, and Its Derivatives", MacDiarmid et al., Synthetic Metals, Vol. 1, pp. 101-118 (1979/80); and "Electrical Transport in Doped Polyacetylene", Park et. al., Journal of Chemical Physics, Vol. 73, pp. 946-957 (1980). The $(CH)_x$ is destroyed and is

converted to a complex, unknown mixture of compounds, all of which contain strong absorption peaks in the infra-red spectra characteristic of the carbonyl group, indicating oxidative degradation.

In addition, there are many reports in literature which stress the reduction in conductivity of cis or trans polyacetylene when exposed to air. See the foregoing references along with "Stability of Polyacetylene Films", Yen et al., Solid State Communications, Vol. 36, pp. 339-343 (1980); and "A Kinetic Study of the Interactions of Trans-Polyacetylene $(CH)_x$ with Oxygen", Haleem et al., Polymer, Vol. 23, pp. 1409-1411 (1982).

There have also been many statements in the literature pointing out the reduction in conductivity of p-doped polyacetylene when exposed to air or oxygen. See, for example, "Conductivity and Hall Effect Measurements in Doped Polyacetylene", Seeger et al., Solid State Communications, Vol. 28, pp. 873-878 (1978); "A Study of Poly (p-Xylylene) - Coated $AsF_5$ - Doped Polyacetylene", Osterholm et al., Journal of Applied Polymer Science, Vol. 27, pp. 931-936 (1982); and "Electrical Transport in Doped Polyacetylene", Park et.al., Journal of Chemical Physics, Vol. 73, pp. 946-957 (1980).

It has been suggested that p-doped polyacetylene may have at least some chemical stability in certain selected aqueous solutions. As reported in Nigrey, MacDiarmid and Heeger, J. Chem. Soc., Chem. Comm., p. 594 (1979), $(CH)_x$ was electrochemically doped in 0.5M aqueous KI solution in a few minutes to give $(CHI_{0.07})_x$ having a conductivity in the metallic regime. The sum of elemental analyses for C, H, and I was 99.8%. This showed that no reaction with water to incorporate oxygen into the $(CH)_x$ had taken place. As time proceeded, however, it was believed that the analysis must have been in error, and that oxygen surely must have been incorporated during the doping process. Very recently, however, the experiment was repeated and similar results obtained. Hence the $[CH^{+0.0415}(I_3^-)_{0.0415}]_x$ formed (C+H+I=99.75%) did not react with water, or, if it did react

during its electrochemical synthesis, the rate of reaction with water must have been very much less than its rate of formation at least during the time needed for doping. Recent studies also show that the rate of decomposition of $[CHI_y)_x$ in aqueous solutions of various pH and chloride ion concentration values is slow. See Wnek et al., Abstracts, I.U.P.A.C. 38th Macromol. Symp., July 12-16, 1982, p. 442.

MacDiarmid and Heeger in Chemica Scripta, Vol. 17, p. 143 (1981) and A. Pron, Ph.D. Thesis, University of Pennsylvania, p. 150 (1980) have found that when a strip of $(CH)_x$ film anhydrously doped to the metallic regime, having a composition of $[CH(AsF_5)_{0.098}]_x$, was placed in 52% aqueous HF for 15 hours, it was converted, as shown by elemental analysis, to

$$[CH(AsF_6)_{0.026}]_x \text{ (C+H+As+F analyses=99.90\%).}$$

No oxygen was incorporated into the material.

As disclosed by MacDiarmid and Heeger in Synthetic Materials 1, 101 (1979/80), protonic acid doping of $(CH)_x$ by the vapors from strong acids such as $HClO_4$ or $H_2SO_4$ to give doped $(CH)_x$ having high metallic conductivities of about $10^3 ohm^{-1}cm^{-1}$ can be had. For example, when $(CH)_x$ film was exposed to the vapor from 70% aqueous $HClO_4$, a material was obtained having a composition by elemental analysis of either

$$[CH^{+0.127}(ClO_4)_{0.127}(H_2O)_{0.297}]_x$$

or

$$[CH(HClO_4)_{0.127}(H_2O)_{0.297}]_x$$

according to whether it is assumed that a proton is present or not. Thermoelectric power studies of the $HClO_4$ doped film show the doping is p-type.

The oxygen present in the form of $H_5O_2$ or $H_2O$ is therefore either not combined with the carbons of the CH chain or, if it is combined with those carbons, then it somehow does not impair the conductivity of the material. If the water is combined with the carbons, then this should reduce the pi conjugation and reduce the conductivity of a polyacetylene chain. However, experimentally, the conductivity is increased. If it is not combined with the carbons, this is

most surprising, since p-doped polyacetylene is a carbonium ion and carbonium ions are known to react instantly with water. Either of these explanations is most surprising and does not fit in with the present picture of the bonding in p-doped $(CH)_x$ or with the understanding of the chemical reactivity of carbonium ions heretofore known.

The electrochemical undoping in aqueous solution of conjugated polymers in accordance with the present invention has not been known. Undoping is necessary to have a rechargeable battery or a fuel cell. The attainment of electrochemical doping in aqueous solution does not imply that electrochemical undoping can be performed. In this regard, numerous, irreversible fates for carbonium ions or carbanions generated through the doping reactions could take place and, according to the prior art, would have been expected. Furthermore, the observation that electrochemical p-doping of polyacetylene in aqueous solution can be performed does not imply that chemical p-doping (or n-doping) in aqueous solution will be possible. Numerous examples of electrochemical oxidations taking place in systems wherein chemical oxidation does not proceed are known. Moreover, the transitory oxygen p-doping of cis-polyacetylene to a maximum conductivity of about $10^{-8} ohm^{-1} cm^{-1}$ is inapposite to the present invention. In this regard, the modification of conductivity is attended by proximate, immediate, degradation of the polyacetylene film itself. Only through the employment of dopants in accordance with the present invention is a useful conductivity modification possible in this system.

The polymers which are suitable for use in connection with the present invention are polymers having conjugation along the main backbone chain thereof and which are capable of being electrochemically oxidized to a p-type doped material and electrochemically reduced to a n-type doped material. While the present invention is related to doping in protic media, identification of the polymers which may be employed in connection with this invention is best accomplished by reference to U. S. Patent 4,321,114 issued March 23, 1982, and

Serial No. 220,496 filed March 11, 1980, assigned to the assignee of this invention, which patent and application have been incorporated herein by reference. Preferred among the polymers which are suitable for employment in the present invention are the polyacetylenes and polyphenylenes. Methods for reversible doping of polyacetylenes and other polymers with the present invention, together with methods for the construction of secondary batteries, may similarly be had from a review of the foregoing patent and patent application.

The construction of fuel cells in accordance with the present invention, together with the preparation of electrolytic cells for the electrolysis of certain compositions will be apparent to those of ordinary skill in the art from a review of the specification, especially the examples. To provide additional instruction in such construction, the publication Fuel Cells: Their Electrochemistry, Bockris et. al., McGraw Hill is incorporated herein by reference.

The following examples have been prepared more fully to elucidate the present invention. It is believed that those of ordinary skill in the art will have no difficulty in ascertaining what polymers, dopants, media and related materials are suitable for inclusion in the present invention and that the same persons will require but routine experimentation to ascertain useful electrolytic systems for performing the various embodiments of this invention in view thereof. It is to be understood that the following examples are offered by way of illustration only and are not to be construed as limiting.

Use of 48% Aqueous $HBF_4$ Electrolyte

Example 1

Polyacetylene, $(CH)_x$, does not react chemically to any significant extent with the non-oxidizing acid, $HBF_4$, in its commercial 48% solution. For example, when a strip of cis rich $(CH)_x$ (1cm x 0.5cm) was immersed in a degassed solution of 48% aqueous $HBF_4$ for 4 hours and pumped dry for 18 hours, the two-probe conductivity of the film was 6.4 x $10^{-4} ohm^{-1} cm^{-1}$, well below the semiconductor-metal transition.

Example 2

A series of experiments was carried out in order to determine if p-doped (oxidized) $(CH)_x$ is stable in 48% aqueous $HBF_4$. A piece of cis rich $(CH)_x$ (2cm x 4cm) was initially electrochemically doped in 0.5M

$$(Bu_4N)(BF_4)/CH_2Cl_2$$

to about 6% (measured by the number of coulombs passed). The doped film had a measured two-probe conductivity of 122.5 $ohm^{-1}cm^{-1}$. The film was then cut in half. One half was sent out for chemical analysis and was found to have a composition of

$$[CH_{1.04}B_{0.0592}F_{0.193}O_{0.100}]_x.$$

The other half was immersed in degassed 48% aqueous $HBF_4$ for 24 hours, pumped dry for 18 hours, and finally sent out for elemental analysis. After immersion and pumping, the film still appeared golden and had a measured two-probe conductivity of 56.3 $ohm^{-1}cm^{-1}$. The elemental analysis of the aqueous $HBF_4$-immersed sample was

$$[CH_{1.08}B_{0.0804}F_{0.214}O_{0.163}]_x.$$

Note that the boron content increased slightly. Moreover, the hydrogen and oxygen contents (by difference) increase as well. This can be viewed as an inclusion of $H_2O$ or the further hydrolysis of $BF_4$ to $BF_3OH^-$ or $BF_2(OH)_2$. However, it is important to note that polyacetylene retained its dopant and remained in the metallic conducting regime.

Example 3

In a second series of experiments, a piece of cis rich $(CH)_x$ (1cm x 2cm) was initially electrochemically doped in 0.5M $(Bu_4N)(BF_4)/CH_2Cl_2$ to about 6% as before. The doped film was then cut in half. The first $1cm^2$ piece of $[CH^{+y}(BF_4)_y]_x$ and a piece of lead were placed in a degassed solution of 0.01M $Pb(BF_4)_2$ in 48% aqueous $HBF_4$. The open circuit voltage ($V_{oc}$) of this cell was 0.810V. The cell was immediately discharged at a constant current of 0.500mA until the discharge voltage of the cell fell to 0.2V representing the approximate point where hydrogen bubbles off the platinum current collector. 1.231 coulombs were produced corresponding to about 3.9% discharge. An identical experiment with the other half of the doped material was performed except that the cell was allowed to stand for 18 hours before discharge. The initial open circuit voltage of this cell was 0.818V and the open circuit voltage after 18 hours was 0.6610V. The cell was then discharged at a constant current of 0.500mA until the discharge voltage of the cell fell to 0.2V. The number of 1.170 coulombs, corresponding to about 3.7% discharge were produced. Hence, little, if any, dopant was lost after 18 hours of immersion in 48% aqueous $HBF_4$. Why the open circuit voltage drops from about 0.82V to about 0.66V over 18 hours is not known at the present time, although it appears likely that it may be due to diffusion equilibrium of the $BF_4$ ion between the exterior and interior of the $(CH)_x$ fibrils.

Example 4

In a third series of experiments, a $1cm^2$ piece of $[CH^{+y}(BF_4)_y]_x$ and a piece of Pb were placed in 0.01M $Pb(BF_4)_2$ in 48% aqueous $HBF_4$. As in Examples 2 and 3, the initial open circuit voltage of this cell is typically about 0.8V and the short circuit current ($I_{sc}$) is typically about 150mA. This cell was successfully cycled two times (discharge/charge) at a constant current of 0.500mA to/from a discharge voltage of about 0.2V. It appears that doped (oxidized) $(CH)_x$ can be electrochemically reduced, electrochemically re-oxidized, and electrochemically reduced again in 48% aqueous $HBF_4$. The coulombic efficiency of the second and third steps above was about 53%. After two complete cycles (discharge/charge) the open circuit voltage was 0.91V and the short circuit current was 159.1mA. Little, if any decomposition of the $(CH)_x$ was visually observed upon this cycling of the system. Attempts to oxidize neutral $(CH)_x$ to the metallic regime in 48% aqueous $HBF_4$ were unsuccessful. However, films of polyacetylene, $(CH)_x$ can be reversibly oxidized and reduced in aqueous solutions of the non-oxidizing acid $HBF_4$ if the $(CH)_x$ is first "activated" by aprotically p-doping it with $BF_4$ in $(Bu_4N)(BF_4)/CH_2Cl_2$ solution. From the foregoing, batteries can be constructed utilizing either p-doped (oxidized) $(CH)_x$ or "activated" $(CH)_x$, i.e., $(CH)_x$ which has been electrochemically oxidized in an aprotic solvent and electrochemically reduced in 48% aqueous $HBF_4$.

Stabilization of p-doped $(CH)_x$ in the Metallic Regime to Air

It has previously been believed that oxygen (in air) destroys electrical conductivity of p- and n-doped polyacetylene. It has now been found that $O_2$ can actually be used to <u>increase</u> the conductivity of $(CH)_x$ to the metallic regime by p-doping and that $(CH)_x$ may be stabilized towards oxygen in its highly conducting metallic, p-doped state by treating it with certain acids.

Example 5

The first series of experiments was carried out in order to determine if $(CH)_x$ could be chemically oxidized by $O_2$ with the incorporation of a suitable counter anion. A strip of cis rich $(CH)_x$ film (1cm x 0.5cm) was placed in a solution of 48% aqueous $HBF_4$. Two platinum clips were attached to each end of the $(CH)_x$ film. Oxygen gas was bubbled over the $(CH)_x$ film and the resistance of the film monitored as a function of time. The resistance dropped rapidly at first but leveled off after about 4-6 hours. The film was dried in vacuo and its two-probe conductivity measured. In several identical experiments, the p-doped (oxidized) material had a two-probe conductivity between about 0.1 $ohm^{-1}cm^{-1}$ and 1 $ohm^{-1}cm^{-1}$.

Example 6

In a similar experiment, a strip of $(CH)_x$ film (1.0cm x 0.5cm) was wetted with 48% aqueous $HBF_4$ and allowed to stand in $O_2$ gas at about 700 torr. Again, the resistance dropped rapidly at first but leveled off after about 18 hours. The film was pumped dry and its two probe conductivity measured. In several identical experiments, the p-doped (oxidized) material had a two-probe conductivity between 0.1 $ohm^{-1}cm^{-1}$ and 1 $ohm^{-1}cm^{-1}$.

Example 7

It was confirmed that $O_2$ acts as the oxidizing agent in Examples 5 and 6. Two pieces of <u>cis</u> rich $(CH)_x$ (1cm x 0.5cm) were mounted in two four-probe conductivity apparatuses. Each piece of film was wetted with 48% aqueous $HBF_4$ for 30 minutes and separately evacuated. $O_2$ gas, about 700 torr, was introduced to one while $N_2$ gas, about 700 torr, was introduced to the other. The resistance of the samples was monitored as a function of time. After 5 days the four probe conductivity of the material in the oxygen atmosphere was about 0.83 $ohm^{-1}cm^{-1}$, while the four probe conductivity of the material in the nitrogen atmosphere was $1.47 \times 10^{-2} ohm^{-1}cm^{-1}$. The conductivity exhibited by the latter film is believed to be due to the ionic conductivity of the aqueous $HBF_4$ wetting the film and/or to the presence of traces of $O_2$ in the $N_2$ gas.

Example 8

A second series of experiments was carried out in order to determine whether $(CH)_x$ can be stabilized towards oxygen in its highly conductive, metallic, p-doped state. $(CH)_x$ was doped in 0.5M $(Bu_4N)(BF_4)/CH_2Cl_2$ to about 6% as in Example 2. The film was then cut in half and each 2cm x 0.5cm piece was mounted to a four-probe conductivity apparatus. One piece was wetted with 48% aqueous $HBF_4$ while the other was left dry. Both pieces were exposed to the air and the resistance of the samples monitored as a function of time. The data are reported in Table I. It is apparent that $O_2$ is capable of oxidizing $(CH)_x$ to the metallic regime and that this oxidazation can be stabilized with certain acids such as aqueous $HBF_4$.

Table I

| Time (hr.) | Wetted ($ohm^{-1}cm^{-1}$) | Unwetted ($ohm^{-1}cm^{-1}$) |
|---|---|---|
| 0 | $1.36 \times 10^2$ | $2.50 \times 10^2$ |
| 168 | $2.05 \times 10^1$ | $1.49 \times 10^0$ |
| 336 | $1.70 \times 10^1$ | $3.54 \times 10^{-1}$ |
| 504 | $6.12 \times 10^0$ | $7.36 \times 10^{-2}$ |
| 672 | $1.25 \times 10^0$ | $1.93 \times 10^{-2}$ |

Material from Examples 5-8 - rationale

These results stem from our recent discoveries based in part on the two redox equations listed below:

$$(CH)_x \quad (CH^{+y})+xye^- \qquad E_{ox}(\text{vs. NHE})=+0.6V$$

$$2H_2O \quad O_2+4H^++4e^- \qquad E_{ox}(\text{vs. NHE})=-1.23V$$

Net reaction:

$$4(CH)_x+xyO_2+4xyHBF_4 \quad 4[CH^{+y}(BF_4)_y]_x+2xyH_2O$$

NHE refers to the Standard Hydrogen Electrode. The value of $E_{OX}$ varies according to the value of "y". When "y" is infinitesimally small, i.e. when one is measuring "parent", undoped $(CH)_x$, $E_{OX}$ is about +0.6V (vs. NHE, using the convention that Li $+e^-$ has an $E_{OX}$=+3.05V vs. NHE). The value of $E_{OX}$ becomes more negative as the value of "y" increases. For example, when y=0.06 then $E_{OX}$=0.63V vs. NHE.

From our discoveries it becomes apparent that, thermodynamically, oxygen will want to oxidize $(CH)_x$ to $(CH^{+y})_x$. If only oxygen and water are present then the counter anion for the $(CH^{+y})_x$ species must be something such as $OH^-$, $O_{-1}$ , or $O_{-2}$ . Such oxygenated species will combine with $(CH)_x$ and destroy it, giving either C-OH and/or C=O bonds. If, however, another counter anion other than the oxygen containing species is present, e.g., the $BF_4$ ion, then the $BF_4$ ion will combine with the $(CH^{+y})_x$ to give a species such as $[CH^{+y}(BF_4)_y]_x$ which will be stable in the presence of oxygen and water once it has obtained its fully oxidized state in the presence of oxygen. It is not necessary to use free acid. Solutions of other aqueous acids such as $HPF_6$, $HClO_4$ may be used instead of $HBF_4$.

The above stabilizations refer to stabilization in acidic media, however stabilization may also be brought about in neutral or basic media as given by the redox reaction below.

$$4OH^- \quad O_2+2H_2O+4e^- \ (1\text{Mbase})\ E_{ox}(\text{vs. NHE})=-0.40V$$

Use of $(CH)_x$ as a Fuel Cell Electrode

Polyacetylene, $(CH)_x$, can be used as a fuel cell electrode. We have discovered that p-doped (oxidized) $(CH)_x$ can act as an oxidizing agent whereas neutral $(CH)_x$, either "as synthesized" or previously "activated", can act as a reducing agent for a variety of organic and inorganic compounds in protic media, especially aqueous media.

Example 9

It was found that neutral "as formed" cis rich $(CH)_x$ either did not react electrochemically or reacted to produce small currents. If, however, it was first "activated" as disclosed below, its electrochemical characteristics as an electrode nearly always were extremely improved. The exact nature of the activation process and/or mechanism is not yet known.

A series of experiments were carried out in order to determine if "activated" $(CH)_x$ could act as a reducing agent. "Activated" $(CH)_x$ was prepared as follows: a $1cm^2$ piece of $[CH^{+y}(BF_4)_y]_x$ synthesized as in Example 2, and a piece of lead were placed in a solution of 48% aqueous $HBF_4$. A Pt clip was previously attached to the top of the $[CH^{+y}(BF_4)_y]_x$ and the Pt clip was covered with paraffin wax in order to isolate the Pt from the solution. The electrodes were about 10cm apart in a "U-cell" type configuration divided into two compartments by a glass frit. The open circuit voltage ($V_{oc}$) of this cell was about 0.68V. The doped film was then discharged at a constant potential of 0.000V versus lead. The current dropped from 18.0mA to 0.068mA in about one hour to give a final $V_{oc}$ of about 0.2V, characteristic of almost completely "undoped", i.e. neutral $(CH)_x$.

$O_2$ gas was then bubbled over the strip of activated $(CH)_x$. The current immediately rose to about 0.7mA and remained at that level for 2 hours. The

experiment was then arbitrarily terminated. The number of coulombs passed was 4.83 C, corresponding to the passage of 0.181 electrons per CH unit in the $(CH)_x$. A significant current flowed only when $O_2$ was passed over the $(CH)_x$ electrode. When the $O_2$ gas was stopped, the current immediately dropped from about 0.7mA, leveling off at about 0.072mA after about 1 hour. It is apparent that $(CH)_x$ is acting as a "catalyst" or a "fuel cell electrode", the fuel being lead in this case and the $O_2$ acting as oxidizing agent. The $O_2$ oxidizes the $(CH)_x$ chemically to $[CH^{+y}(BF_4)_y]_x$ which is then immediately reduced electrochemically by the lead. The composition of the $(CH)_x$ is believed to remain essentially unchanged during the reaction. The net reaction is believed to be:

$$2Pb+O_2+4HBF_4 \quad 2Pb(BF_4)_2+2H_2O$$

<u>Example 10</u>

A $1cm^2$ piece of <u>cis</u> rich $(CH)_x$ "activated" in accordance with Example 9 was allowed to discharge at a constant potential of 0.000V versus lead for 24 hours while $O_2$ was constantly bubbled over it. The average discharge current for the 24 hr. period was 0.675mA and the total number of coulombs produced was 58.35C, corresponding to the transfer of 2.187 electrons per CH unit in the $(CH)_x$. This experiment was repeated with a $1cm^2$ piece of <u>cis</u> rich $(CH)_x$ "activated" in accordance with Example 9. Instead of using a Pt wire clip as the current collector, a thin carbon sheet was connected to the $(CH)_x$ using electrodag. The cell was allowed to discharge at a constant potential of 0.000V versus lead for 24 hours while $O_2$ was constantly bubbled over it. The average discharge current for the 24 hour period was 0.356mA and the total number of coulombs produced was 30.729C, corresponding to the transfer of 0.9113 elections per CH unit in the $(CH)_x$.

Example 11

A 1cm$^2$ piece of $[CH_{+y}(BF_4)_y]_x$ activated in accordance with Example 9 and a carbon rod were placed in a solution of 48% aqueous $HBF_4$ in a "U-cell" type configuration divided into two compartments by a glass frit. A Pt clip was previously attached to the top of the $[CH^{+y}(BF_4)_y]_x$ and the Pt clip was covered with paraffin wax in order to isolate the Pt from the solution. A 50/50 (Vol/Vol) hydrazine/water mixture was added to the carbon rod compartment. The open circuit voltage ($V_{oc}$) of this cell was about 0.84V. The doped film was then discharged at a constant potential of 0.000V between the two electrodes. The current dropped from 4.5mA to 0.100mA in 30 minutes. $O_2$ gas was then bubbled over the strip of activated $(CH)_x$. The current immediately rose to about 0.40mA and slowly dropped to 0.31mA in 2 hours. Bubbles of $N_2$ gas were observed forming on the carbon rod. The number of coulombs passed was 2.469C, corresponding to the passage of 0.0694 electrons per CH unit in the $(CH)_x$. The $O_2$ oxidized the $(CH)_x$ chemically to $[CH^{+y}(BF_4)_y]_x$ which is then immediately reduced by electrons liberated by the reduction of the $N_2H_4$ at the C rod, which are transferred to the $[CH^{+y}(BF_4)_y]_x$ via the external wire. The composition of the $[CH^{+y}(BF_4)_y]_x$ is believed to remain unchanged during the reaction. The net reaction is thought to be:

$$N_2H_4+O_2 \quad N_2+2H_2O$$

The reduction in the current during the two hour experiment is believed to be due to the 50/50 $N_2H_4/H_2O$ mixture being alkaline. This mixture slowly neutralizes the acidic media in which the $(CH)_x$ electrode is immersed.

Example 12

A 1.5cm x 2cm piece of cis rich $(CH)_x$ film and a strip of Pb wire were immersed in an 0.5M $Pb(ClO_4)_2$ solution in 12 M $HClO_4$. The electrodes were about 10mm apart. After equilibrium for four hours the $(CH)_x$ exhibited an $E_{ox}$ (vs. Pb) of 0.85V indicating chemical doping of the $(CH)_x$. The two electrodes were connected via an ammeter and a (very large) short circuit current of 330mA was observed. The short circuit discharge was continued for 18.5 hours after which the short circuit current had dropped to 1mA. A white precipitate of $PbCl_2$ coated the polyacetylene film and was present at the bottom of the cell. The 1077 coulombs which had passed during this time corresponded to 14.45 positive charges being placed on each (CH) unit, i.e. to 1445% doping of the $(CH)_x$, if the charges had remained on the $(CH)_x$. The results of this experiment can be explained in the following manner. Upon connecting the chemically oxidized $(CH)_x$ electrode, i.e. $[CH^{+y}(ClO_4)_y]_x$, and the lead electrode, the $(CH)_x$ electrode is reduced electrochemically by the lead. As soon as the $(CH)_x$ is even slightly reduced, the acid immediately chemically oxidizes it back to $[CH^{+y}(ClO_4)_y]_x$. This series of electrochemical reductions and chemical oxidations can go on continually until it is mechanically slowed down by the deposition of insoluble $PbCl_2$ on the surface of the $(CH)_x$ film. The net reaction is believed to be

$$8Pb+16HClO_4 \quad 7Pb(ClO_4)_2+PbCl_2+8H_2O$$

Example 13

Example 12 was repeated with a 1cm x 2cm piece of cis rich $(CH)_x$ film. The cell had an initial short circuit current of 309mA and ran a small electric motor in excess of 6 hours. The surface of the film was then coated with a $PbCl_2$ precipitate. The film was washed briefly in water to dissolve some of the $PbCl_2$ and replaced in the cell. An $E_{ox}$ (vs. Pb) of 0.82V was obtained after 5 minutes and a short circuit current of 55mA was then observed. The motor could then again be run by the cell.

Example 14

A $1cm^2$ piece of cis rich $(CH)_x$ film attached by a Pt wire clip at the top and a carbon rod were immersed in a 12M $HClO_4$ solution. The electrodes were about 10cm apart in a "U-cell" type configuration divided into two compartments by a glass frit. A 50/50 (vol/vol) hydrazine/water mixture was added to the carbon rod compartment. After equilibrium for 30mm, the open circuit voltage ($V_{oc}$) was 0.814V. The cell was allowed to discharge at a constant potential of 0.000V. An initial short circuit current of 3.8mA was observed. The short circuit discharge was continued for 2 hours after which the short circuit current had dropped to 0.80mA. Bubbles of $N_2$ gas were observed on the carbon rod. About 11.43C had passed during this time corresponding to the passage of 0.257 electrons for each CH unit in the $(CH)_x$.

The reduction in the current during the two hour experiment is believed to be due to the fact that the 50/50 $N_2H_4/H_2O$ mixture is alkaline and that this then reacted in the pores of the glass frit to precipitate insoluble $(N_2H_5)^+ + (ClO_4)^-$ in the pores of the frit. Such a clogging of the frit would impair free movement of ions through the frit and hence reduce the current.

Example 15

A cell similar to that of Example 9 was prepared having an open circuit voltage ($V_{oc}$) of 0.778 V. The doped film was then discharged at a constant potential of 0.00V vs Pb. The current dropped from 18.3mA to 0.17mA over 30 minutes. Benzoquinone was then added to the "activated" $(CH)_x$ compartment; the current immediately rose to about 12.5mA, slowly dropping to about 2.4mA after 2 hours. The number of coulombs produced was 37.117C corresponding to the passage of 1.391 electrons per CH unit. The $(CH)_x$ acted as a "catalyst", i.e. as a "fuel cell electrode", the fuel being lead and the oxidizing agent being benzoquinone. The benzoquinone oxidized the $(CH)_x$ chemically to $[CH^{+y}(BF_4)_y]_x$ which was then immediately reduced electrochemically by the lead. Hydroquinone and lead floroborate were produced overall. The composition of the $(CH)_x$ appeared to remain unchanged during the reaction. The overall reaction may be represented by the following equation

$$O= \quad =O+2HBF_4+Pb \quad HO- \quad -OH+Pb(BF_4)2$$

The reduction in the current during this two hour experiment is believed to be due to the fact that insoluble hydroquinone is deposited on the surface of the $(CH)_x$ film.

Example 16

A piece of cis rich $(CH)_x$ (1cm x 2cm) was initially doped in 0.5M $(Bu_4N)(BF_4)/CH_2Cl_2$ to about 6% as in Example 2. The doped film was then cut in half and the two pieces of $[CH^{+y}(BF_4)_y]_x$ were placed in a solution of 48% aqueous $HBF_4$ about 10cm apart in a "U-cell" type configuration which was divided into two compartments by a glass frit. The open circuit voltage of this cell was, of course, 0.00V. Benzoquinone was added to one compartment and $CrCl_2$ was dissolved in the other. The open circuit voltage immediately rose to about 1V and stabilized at 1.123V after about 30 minutes. The film immersed in the benzoquinone/48% aqueous $HBF_4$ solution was oxidized to a higher oxidization level while the film immersed in the $CrCl_2$/48% aqueous $HBF_4$ was believed to be reduced to neutral $(CH)_x$ since the film lost its golden color, characteristic of oxidized film. The cell was discharged at a constant potential of 0.00V, oxidizing $Cr^{+2}$ to $Cr^{+3}$ while reducing the benzoquinone. The initial short circuit current was 6.8mA which fell to 0.72mA after about 4 hours. A total of 17.257 coulombs were produced. This corresponds to the passage of 0.495 electrons per CH unit. The overall reaction may be represented by the following equation

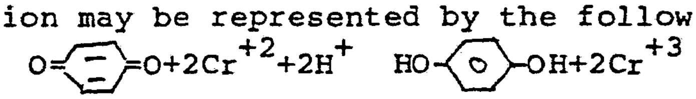


Example 17

An analogous experiment to Example 16 was performed where $CrCl_2$ was replaced with hydrazine. Benzoquinone was added to one compartment of the "U" cell and a 50/50 (vol/vol) hydrazine/water mixture was added to the other. The pH of the hydrazine/water mixter was still less than 0. The film immersed in the benzoquinone/48% aqueous $HBF_4$ solution was spontaneously chemically oxidized to a higher oxidization level while the film immersed in the hydrazine/48% aqueous $HBF_4$ was spontaneously chemically reduced and some bubbles appeared on its surface. The cell was discharged at a constant potential of 0.000V. The initial short circuit current was 11.0mA and fell to 0.240mA after 2 hours. About 3.556 coulombs were produced corresponding to the passage of 0.128 electrons per CH unit.

Example 18

An analogous experiment to Example 17 may be performed where benzoquinone is replaced with oxygen. Oxygen gas would be bubbled in one compartment of the "U-cell" and a 50/50 (vol/vol) hydrazine/water mixture added to the other. The hydrazine/water mixture would be acidic. The film over which oxygen is bubbled in 48% $HBF_4$ would be spontaneously, chemically oxidized to a higher oxidation level while the film immersed in the hydrazine/48% aqueous $HBF_4$ would be spontaneously, chemically reduced and some bubbles would appear on its surface indicating progress of the reaction.

While final evaluation of Example 17 has not yet been made, the results for that example as well as for Example 16 and those expected for Example 18 demonstrate that $[CH^{+y}(BF_4)_y]_x$ can act as a good oxidizing agent. Both $Cr^{+2}$ and $H_2NNH_2$ were believed to be oxidized by $[CH^{+y}(BF_4)_y]_x$ to $Cr^{+3}$ and $N_2$ respectively. In conclusion, it is apparent that $(CH)_x$ (especially when activated) either or $[CH^{+y}(X)_y]_x$ can act as an electrode in fuel cell type processes in protic media either for the reduction or oxidation of a variety of organic and inorganic chemical species.

Chemical p-doping of $(CH)_x$ in aqueous solution

Example 19

A piece of cis rich $(CH)_x$ film (1.4cm x .4cm) was attached to two platinum clips and immersed in an aqueous solution of $H_2SO_4$. The resistance of the film was monitored versus time. Identical experiments were carried out with degassed 6M, 9M 12M, 15M, and 18M aqueous $H_2SO_4$ solutions. Both the log vs. time for each specified concentration as well as the after 30 minutes versus molarity were plotted in Figures 1 and 2 respectively. It can be seen that $(CH)_x$ undergoes a semiconductor-metal transition in aqueous solution. The conductivity at first slowly increases from $10^{-5} ohm^{-1} cm^{-1}$ and then suddenly increased from about 0.4 $ohm^{-1}cm^{-1}$ to 140 $ohm^{-1}cm^{-1}$ as the acid concentration was increased from 12M to 18M. When the resulting flexible golden film was removed from the 18M solution and was washed with cyclohexene (to remove $H_2SO_4$) the film still had a conductivity of about 100 $ohm^{-1}cm^{-1}$. The reaction occurring is believed to be represented by the following equation

$$2(CH)_x + 3xyH_2SO_4 \quad 2[CH^{+y}(HSO_4)_y]_x + xyH_2SO_3 + xyH_2O$$

It is possible that the $H_2SO_3$ may, itself, also be reduced further.

Example 20

In an experiment similar to Example 19, a piece of cis rich $(CH)_x$ film (1.4cm x 0.4cm) was attached to two platinum clips and immersed in an aqueous solution of $HClO_4$. The resistance of the film was monitored vs time. Identical experiments were carried out with degassed 3M, 6M, 9M and 12M aqueous $HClO_4$ solution. Both the log versus time for each specified concentration as well as the after 30 minutes versus molarity were plotted and are shown in Figures 3 and 4 respectively. The $(CH)_x$ undergoes a semiconductor-metal transition in aqueous $HClO_4$ solution. Note that the conductivity increased from about $5x10^{-2} ohm^{-1}cm^{-1}$ to about 5 $ohm^{-1}cm^{-1}$ and finally to about 350 $ohm^{-1}cm^{-1}$ as the acid concentration was changed from 6M to 12M. The reaction occurring is believed to be represented by the following equation

$$8(CH)_x+9xyHClO_4 \quad 8[CH^{+y}(ClO_4)_y]_x+xyHCl+xyH_2O$$

The studies of Examples 19 and 20 demonstrate that strong, aqueous $H_2SO_4$ and $HClO_4$ can chemically p-dope $(CH)_x$ film immersed therein. The reaction occurring when $(CH)_x$ is immersed in strong $H_2SO_4$ or $HClO_4$ is believed to involve the reduction of the acid and the concomitant oxidation of $(CH)_x$. The conductivity increases with increasing acid concentration. It is believed that as the concentration of acid increases, thè $(CH)_x$ becomes more highly doped since it is know that for $(CH)_x$ the conductivity is related to the level of dopant. From Figures 1-4, it can be concluded that $(CH)_x$ can undergo a semiconductor-metal transition in acidic aqueous solution.

Electrochemical p-doping of $(CH)_x$ in Aqueous Solution

Example 21

When cis rich $(CH)_x$ film is immersed in 50% aqueous HF for 1 hour and is then pumped in a vacuum system for 18 hours, no experimentally observable increase in weight or conductivity is observed.

Example 22

When a piece of cis rich $(CH)_x$ film (1.5cm x 2.0cm) is used as the anode and platinum foil as the cathode in 50% HF and a potential of 1.0V is applied for a period of 20 minutes, the $(CH)_x$ film becomes doped. After washing in 50% HF and pumping in a vacuum system for 18 hours a flexible, golden film having a conductivity of about 1 $ohm^{-1}cm^{-1}$ was obtained. Elemental analysis gave a composition corresponding to $[CH_{1.06}F_{0.083}O_{0.091}]_x$. It is believed that this may have a constitution such as $[CH^{+0.04}(HF_2)^-_{0.04}(H_2O)_{0.09}]_x$.

Example 23

A $1cm^2$ piece of cis rich $(CH)_x$ film and a piece of lead foil were placed in a saturated solution of $PbF_2$ in 50% aqueous HF. After 30 minutes $E_{ox}$ (vs. Pb) equaled 0.60V. This implies some chemical doping in the presence of aqueous HF. The $(CH)_x$ was then attached to the positive terminal of a d.c. power supply and oxidized for 30 minutes at a constant current of 1.0mA. This corresponds to about 6% p-doping of the $(CH)_x$. The $E_{ox}$ (vs. Pb) 30 minutes after discontinuance of the d.c. current was 0.81V. On connecting the $(CH)_x$ and Pb electrodes via an ammeter a surprisingly large short circuit current of 19.8mA was observed. It is concluded that the $(CH)_x$ is electrochemically oxidized upon application of the d.c. current and that this reaction is, at least in part, electrochemically reversible.

Example 24

Two pieces of cis rich $(CH)_x$ film (1cm x 1.5cm) and a piece of platinum foil were placed in a saturated solution of $PbF_2$ in 50% aqueous HF. Each piece of $(CH)_x$ in turn was attached to the positive terminal of a d.c. power supply and the platinum attached to the negative terminal. A constant voltage of 1.0V was applied to give about 3% oxidation of the $(CH)_x$. The d.c. power supply was then connected to the two pieces of oxidized $(CH)_x$, placed 10mm apart, each having a (assumed) composition of $[CH^{+0.03}(HF_2)_{0.03}]_x$. A constant voltage of 1.0V was applied for a period so that the same number of coulombs used in the original oxidation of each piece of film had passed. It was assumed that one piece of film now had a composition of $[CH^{+0.06}(HF_2)_{0.06}]_x$, and the other a composition of $(CH)_x$. Upon connecting the two pieces of film via a voltmeter, a potential difference of 0.71V was observed. On connecting them via an ammeter a relatively large short circuit current of 6.4mA was obtained. These results strongly suggest a reversible electrochemical reaction involving $(CH)_x$.

Example 25

A piece of cis rich $(CH)_x$ film 2cm x 3cm and a piece of platinum foil were placed in a saturated solution (0.5M) of $NaAsF_6$ in 50% HF. The $(CH)_x$ was attached to the positive terminal and the platinum to the negative terminal of a d.c. power supply. A constant potential of 1.0V was applied between the electrodes for about 30 minutes. The film was then washed in 50% HF and pumped in a vacuum system for 18 hours. In several different experiments flexible, golden, p-doped films having good metallic conductivities of about 10 to 100 $ohm^{-1}cm^{-1}$ in the metallic regime were obtained. Significantly, the films contained no oxygen. The F content varied from one preparation to another, e.g.

$$[CH(AsF_{5.1})_{0.026}]_x$$

and

$$[CH(AsF_{4.7})_{0.029}]_x$$

The nature of the dopant species and the cause of the variable F content is not presently known.

Example 26

A platinum mesh was folded around a $1cm^2$ piece of *cis* rich $(CH)_x$ film and placed 10mm apart from a piece of lead wire in a saturated solution of $PbF_2$ in 50% HF which was also 0.5M in $NaAsF_6$. The $(CH)_x$ electrode and the Pb electrode were attached to the positive and negative terminals respectively of a d.c. power supply and a constant current of 1.0mA was passed for 30 minutes. This corresponded to an approximately 8.1% oxidation of the $(CH)_x$. The $E_{ox}$ (vs. Pb) of this oxidized, $(CH)_x$ was 0.95V. On connecting the two electrodes via an ammeter a large short circuit current of 198mA was observed. In an identical experiment, the $(CH)_x$ was found to have an $E_{ox}$ (vs. Pb) of 0.57V after sitting in the electrolyte for 30 minutes prior to any electrochemical studies. Oxidation to 8.1% was carried out as before. Thirty minutes after the oxidation was terminated the oxidized $(CH)_x$ exhibited an $E_{ox}$ (vs. Pb) of 0.80V. A short circuit current of 120.5mA was then observed. A reversible, electrochemical reaction appears to occur in the system strongly suggesting its potential usefulness as a storage battery cell.

Example 27

Two 1.0cm x 1.5cm *cis* rich $(CH)_x$ electrodes attached to a platinum wire current collector were placed in an 0.5M $NaAsF_6$ solution in 50% HF. A platinum foil electrode was also placed in the solution. Each piece of $(CH)_x$ film was oxidized separately to about 3% (calculated by the number of coulombs passed) by attaching the film to a positive terminal, respectively of a d.c. power supply. The electrochemical oxidation of the $(CH)_x$ was carried out at a constant applied potential of 1.0V. The two pieces of $(CH)_x$ 10mm apart in the electrolyte were then attached to the positive and negative terminals of a d.c. power supply at a constant applied potential of 1.0V. The number of coulombs passed were such that one piece of oxidized $(CH)_x$ was reduced to neutral $(CH)_x$ and the other further oxidized to about 6%. The open circuit voltage then observed between the two pieces of film was 0.68V. On connecting the two pieces of film, a short circuit current of 13.0mA was observed. After a 30 minute short circuit discharge, the current had fallen to 0.01mA representing a 17% coulombic efficiency. Accordingly, this system has potential as a rechargeable storage battery cell.

Example 28

In several separate experiments using a saturated solution of $NaPF_6$ in 50% HF as an electrolyte, 1.5cm x 2.0cm pieces of $(CH)_x$ film were attached to the positive terminal and a piece of platinum foil was attached to the negative terminal of a constant potential (1.25V) d.c. power supply for about 30 minutes. The $(CH)_x$ was oxidized to about 7.0% by this process. After washing with 50% HF and pumping for 18 hours in vacuo, flexible, golden films having conductivities in the metallic regime, 30 to 70 $ohm^{-1}cm^{-1}$, were obtained. Elemental analyses from two experiments gave compositions corresponding to

$$[CH_{1.04}P_{0.0081}F_{0.10}O_{0.13}]_x$$

and

$$[CH_{1.11}P_{0.0071}F_{0.14}O_{0.05}]_x$$

oxygen (by difference) is apparently present, possibly in the form of water of hydration. The very small phosphorus content is unexplained although it may be that the phosphorus is present as an impurity due to incomplete removal of the $NaPF_6$ during the washing process.

These results show that $(CH)_x$ can be electrochemically oxidized in aqueous solution and that even though oxygen is incorporated in some way into the film the conductivity of the material obtained is well into the metallic regime.

Example 29

Several experiments were carried out in an identical manner to those described in Example 24 except that a saturated solution of $NaBF_4$ in 50% HF was employed in lieu of the $NaPF_6$. Golden, flexible films having conductivities of about 1 $ohm^{-1}cm^{-1}$ were obtained. Elemental analysis of films from two separate experiments gave compositions corresponding to

$$[CH_{1.05}B_{0.022}F_{0.09}O_{0.02}]_x$$

and

$$[CH_{1.03}B_{0.03}F_{0.08}O_{0.07}]_x$$

Electrochemical oxidation processes occur during the passage of the electric current in these experiments, but the conductivity levels obtained are lower than those for the systems in which $NaAsF_6$ and $NaPF_6$ solutions in 50% HF were used.

Electrochemical p-doping of Polyparaphenylene, (PPP), in Aqueous Solution

Example 30

A 10mm diameter, 100mg pellet of PPP was annealed *in vacuo* for 48 hours at 400°C. It was then attached mechanically to a Pt wire and placed in an 0.5M solution of $Pb(ClO_4)_2$ in 12M $HClO_4$ 10mm from a lead counter electrode. The $E_{ox}$ (vs. lead) of the PPP after a 30 minute immersion in the electrolyte was 1.08V. At this time it gave a short circuit current of 65.3mA. It was then attached to the positive terminal and the lead attached to the negative terminal of a constant current d.c. power supply for 1 hour at 2.0mA. From the coulombs passed, the expected composition of the PPP was

$$[(C_6H_4)^{+0.052}(ClO_4)^-_{0.052}]_x$$

(exclusive of chemical oxidation). After standing for 30 minutes in the electrolyte, the doped PPP exhibited an $E_{ox}$ (vs. Pb) of 1.17V and a short circuit current of 76.0mA.

Example 31

Example 30 was repeated using 6M $HClO_4$. The $E_{ox}$ (vs. Pb) after 30 minutes was 0.92V and the corresponding short circuit current was 0.70mA. After oxidizing electrochemically to a composition corresponding to

$$[(C_6H_4)^{+0.046}(ClO_4)_{0.046}]_x$$

(exclusive of chemical oxidation) an $E_{ox}$ (vs. Pb) of 1.18V was obtained after a 30 minute equilibration period. A short circuit current of 74.0mA was recorded at that time.

Examples 26 and 27 demonstrate that polyparaphenylene can be oxidized electrochemically in aqueous solution in a manner analogous to $(CH)_x$, and that this system is reversible and can act as a recharageable battery cell.

$(CH)_x$ as a Secondary Battery Electrode in $HClO_4$ and $H_2SO_4$

Example 32

A $1cm^2$ piece of cis rich $(CH)_x$ film is doped overnight in 12M $HClO_4$ to yield a chemically 11% p-doped material having an $E_{ox}$ (vs. lead) of 0.90V. This material was then placed along with a lead counter electrode in an 0.5M solution of $Pb(ClO_4)_2$ in 12M $HClO_4$. When the $(CH)_x$ and Pb electrodes of the above electrochemical cell were attached to the positive and negative terminals respectively of a d.c. power supply at a constant voltage oxidation of 1.20V for about 8.5 minutes and the power supply was then disconnected, an immediate $E_{ox}$ (vs. lead) of about 1.19V was observed. The $(CH)_x$ had therefore been very highly oxidized electrochemically in aqueous $HClO_4$. The potential fell during 2 hours, possibly in part because of diffusion of dopant species from the exterior to the interior of $(CH)_x$ fibrils. The value of $E_{ox}$ (versus lead) after 2 hours was about 0.94V, corresponding to a doping level of 15%. The $(CH)_x$ had been oxidized in aqueous $HClO_4$ to a degree beyond the 11% obtained by simple immersion of the $(CH)_x$ film in 12M $HClO_4$. The $E_{ox}$ value fell further during the next 24 hour period to about 0.91V versus lead corresponding to a doping level of 12.2%, still in excess of that obtained chemically by immersing $(CH)_x$ film in 12 M $HClO_4$.

It is believed that the following electrochemical oxidation of the $(CH)_x$ occurred during the above "battery charging" reaction:

$$[CH^{+0.11}(ClO_4)_{0.11}]_x + 0.02xPb(ClO_4)_2$$
$$[CH^{+0.15}(ClO_4)_{0.15}]_x + 0.02xPb.$$

During discharge, the reverse reaction to that given above, the short circuit current observed, after two hours standing (potential [vs. Pb], 0.94V) was 338mA.

Whether the observed decrease in $E_{ox}$ on standing is due to further slow diffusion of the dopant species into the interior of the $(CH)_x$ fibrils or whether it is due to slow reaction with air, to partial hydrolysis or to some other factor is not presently known. During the electrochemical

oxidation and during the 24 hour standing period, the apparatus was exposed to air. All previous polymer batteries using organic electrolytes would have deteriorated completely in a few minutes, even at lower doping levels, under aerobic conditions.

It is believed that the battery cell can be repeatedly recycled between 0.9V (vs. Pb) and 1.0V (vs. Pb) at high coulombic efficiency without discernible degradation. Due to the logarithmic form of the equation relating the potential of doped $(CH)_x$ to the percent oxidation, a very small change in voltage corresponds to a large change in percent doping at doping concentrations greater than about 10%. This is an ideal characteristic for an electrode in a secondary battery cell.

Example 33

A battery cell similar to that of Example 28 was constructed from a $1cm^2$, 4mg piece of cis-rich $(CH)_x$ film in 0.5M $Pb(ClO_4)_2$/12 M $HClO_4$ together with a lead counter electrode. The cell was "charged" at a constant voltage of 1.0V for 25.5 hours. The initial charging current was 13mA and the final charging current was 0.05mA. The short circuit current after subsequent standing for a period of 24 hours was in excess of 0.5 ampere and was sufficient to run a small electric motor and propeller. No previously known type of polymer electrochemical cell can accomplish this feat using $1cm^2$ piece of polymer film.

Example 34

A 1cm x 1.5cm piece of cis rich $(CH)_x$ film and a strip of lead were placed in 12M $H_2SO_4$ about 10mm apart. After 30 minutes the polyacetylene film had an $E_{ox}$ (vs. lead) of 0.60V. The $(CH)_x$ and Pb electrodes were then attached to the positive and negative electrodes respectively of a constant voltage (1.25V) d.c. power supply for 7.5 minutes. The coulombs passed corresponded to 6% oxidation of the $(CH)_x$. The $E_{ox}$ (vs. Pb) of the $(CH)_x$ electrode was 1.12V and on connecting the electrodes via an ammeter a short circuit current of 161mA was observed. These observations suggest that this system also involves reversible electrochemistry suggestive of potential secondary battery applications.

## All Polymer Electrode Batteries

### Example 35

One $1cm^2$ piece of cis rich $(CH)_x$ film was placed in 12M $HClO_4$ containing dissolved $Pb(ClO_4)_2$ together with a Pb electrode. The piece of $(CH)_x$ film was attached to the positive terminal of a 1.2V d.c. power source and the lead electrode was attached to the negative terminal for 8 minutes. This resulted in the $(CH)_x$ being oxidized to a greater extent than that obtained by chemical oxidation in the electrolyte. The lead electrode was disconnected and a second $1cm^2$ piece of $(CH)_x$ placed in the electrolyte and connected to the first, electrochemically doped, piece of $(CH)_x$ via a voltmeter. A potential of 0.30V was observed and an unexpectedly large short circuit current was obtained (55mA). After a 15 minute discharge the current had fallen to 0.04mA. The coulombic efficiency was 48%. This experiment suggests that a useful all-$(CH)_x$ rechargeable cell may be obtainable in this system. The overall discharge reaction is believed to be given by the equation.

$$[CH^{+0.11}(ClO_4)_{0.11}]_x + [CH^{+0.178}(ClO_4)_{0.178}]_x$$
$$2[CH^{+0.144}(ClO_4)_{0.144}]_x$$

Example 36

Two 1cm x 1.5cm pieces of cis rich $(CH)_x$ film were placed 10mm apart in a 12M $H_2SO_4$ solution together with a piece of Pt foil. Both pieces of $(CH)_x$ were oxidized sequentially and electrochemically to 3% by attaching each one to the positive terminal and the Pt to the negative terminal respectively of a 0.75V constant voltage d.c. power supply for a period of 8.5 minutes. The level of oxidation was calculated from the number of coloumbs passed. The two $(CH)_x$ electrodes were then attached to the terminals of an 0.75V constant potential power supply for 4 minutes so that the number of coulombs passed should oxidize one $(CH)_x$ electrode to 6% and reduce the other to neutral $(CH)_x$. A potential difference of 0.48V was then observed between the two electrodes. On connecting them via an ammeter a short circuit current of 29.2mA was observed. Upon continuing the short circuit discharge for 10 minutes the short circuit current fell to 0.07mA. The coulombic efficiency was 23%.

The discharge reaction of this cell is believed to be

$$(CH)_x + [CH^{+0.06}(HSO_4)_{0.06}]_x \quad 2[CH^{+0.03}(HSO_4)_{0.03}]_x.$$

Again, this system shows considerable potential for a rechargeable battery system.

WHAT IS CLAIMED IS:

1. A secondary battery comprising

an anode;

a cathode comprising a conjugated polymer having conjugated unsaturation along a main backbone chain thereof, said polymer being electrochemically oxidizable to a p-type doped material and electrochemically reducible to an n-type doped material; and

an electrolyte, said electrolyte comprising a protic solvent and at least one ionic dopant capable of doping said polymer to a conductive state in said electrolyte.

2. The battery of claim 1 wherein said solvent comprises water.

3. The battery of claim 1 wherein said solvent comprises at least one alcohol or amine.

4. The battery of claim 1 wherein said polymer comprises at least one polyacetylene.

5. The battery of claim 1 wherein said polymer comprises at least one polyphenylene.

6. The battery of claim 1 wherein said dopant comprises a chemical group selected from the group consisting of halide ions, polyhalide ions, $ClO_4$, $PF_6$, $HSO_4$, $AsF_6$, $AsF_4$, $SO_3CF_3$, and $BF_4$.

7. The battery of claim 1 wherein said dopant comprises a cation of a metal whose Pauling electronegativity is less than about 1.6 or an organic cation selected from the group consisting of $(R_{4-X}MH_X)^+$ and $R_3E^+$ where R is alkyl or aryl; M is N, P, or As; E is O or S; and X is an integer from 0 to 4.

8. The battery of claim 7 wherein said metal comprises an alkali metal.

9. The battery of claim 7 wherein said metal comprises lithium.

10. The battery of claim 1 wherein said anode comprises a metal.

11. The battery of claim 1 wherein said anode comprises an alkali metal.

12. The battery of claim 1 wherein said anode comprises lead.

13. The battery of claim 1 wherein said anode comprises a conjugated polymer having conjugated unsaturation along a main backbone chain thereof, said polymer being electrochemically oxidizable to a p-type doped material and electrochemically reducible to an n-type doped material.

14. The battery of claim 13 wherein each of said anode and cathode have been doped chemically to a conductive state by a dopant specie.

15. A secondary battery comprising

a cathode;

an anode comprising a conjugated polymer having conjugated unsaturation along a main backbone chain thereof, said polymer being electrochemically oxidizable to a p-type doped material and electrochemically reducible to an n-type doped material; and

an electrolyte, said electrolyte comprising a protic solvent and at least one ionic dopant capable of doping said polymer to a conductive state in said electrolyte.

16. The battery of claim 15 wherein said solvent comprises water.

17. The battery of claim 15 wherein said solvent comprises at least one alcohol or amine.

18. The battery of claim 15 wherein said polymer comprises at least one polyacetylene.

19. The battery of claim 15 wherein said polymer comprises at least one polyphenylene.

20. The battery of claim 15 wherein said dopant comprises a cation of a metal whose Pauling electronegativity is less than about 1.6 or an organic cation selected from the group consisting of $(R_{4-x}MH_x)^+$ and $R_3E^+$ where R is alkyl or aryl; consisting of M is N, P or As; E is O or S; and X is an integer from 0 to 4.

21. The battery of claim 15 wherein said dopant comprises a chemical group selected from the group consisting of halide ions, polyhalide ions, $ClO_4$ , $PF_6$ , $HSO_4$ , $AsF_6$ , $AsF_4$ , $SO_3CF_3$ , and $BF_4$ .

22. The battery of claim 20 wherein said metal comprises an alkali metal.

23. The battery of claim 20 wherein said metal comprises lithium.

24. The battery of claim 15 wherein said cathode comprises a conjugated polymer having conjugated unsaturation along a main backbone chain thereof, said polymer being electrochemically oxidizable to a p-type doped material and electrochemically reducible to an n-type doped material.

25. A secondary battery comprising

an anode;

a cathode; and

an electrolyte;

said anode and cathode each comprising a conjugated polymer having conjugated unsaturation along a main backbone chain thereof, said polymer being electrochemically oxidizable to a p-type doped material and electrochemically reducible to an n-type doped material;

said electrolyte comprising a protic solvent and at least one dopant capable of doping said polymer to a conductive state in said electrolyte;

the cathode polymer being electrochemically p-doped with said dopant to an oxidized state as compared with the anode polymer.

26. The battery of claim 25 wherein said solvent comprises water.

27. The battery of claim 25 wherein said solvent comprises at least one alcohol or amine.

28. The battery of claim 25 wherein said polymer comprises at least one polyacetylene.

29. The battery of claim 25 wherein said polymer comprises at least one polyphenylene.

30. The battery of claim 25 wherein said dopant comprises a chemical group selected from the group consisting of halide ions, polyhalide ions, $ClO_4$, $PF_6$, $HSO_4$, $AsF_4$, $AsF_6$, $SO_3CF_3$, and $BF_4$.

31. The battery of claim 25 wherein said electrolyte comprises a cation of a metal whose Pauling electronegativity is less than about 1.6 or an organic cation selected from the group consisting of $(R_{4-x}MH_x)^+$, and $R_3E^+$ where R is alkyl or aryl; M is N, P, or As: E is O or S; and X is an integer from 0 to 4.

32. The battery of claim 31 wherein said metal is an alkali metal.

33. The battery of claim 31 wherein said metal is lithium.

34. A secondary battery comprising
an anode;
a cathode; and
an electrolyte;
said anode and cathode each comprising a conjugated polymer having conjugated unsaturation along a main backbone chain thereof, said polymer being electrochemically oxidizable to a p-type doped material and electrochemically reducible to an n-type doped material;
said electrolyte comprising a protic solvent and at least one ionic dopant capable of doping said polymer to a conductive state in said electrolyte;
the anode polymer being electrochemically n-doped with said dopant to a reduced state as compared with the cathode polymer.

35. The battery of claim 34 wherein said solvent comprises water.

36. The battery of claim 34 wherein said solvent comprises at least one alcohol or amine.

37. The battery of claim 34 wherein said polymer comprises at least one polyacetylene.

38. The battery of claim 34 wherein said polymer comprises at least one polyphenylene.

39. The battery of claim 34 wherein said cathode comprises lead.

40. An electrochemical fuel cell comprising:

an electrochemically oxidizable fuel;

an electrochemically reducible oxidizing agent;

catalyst electrode means comprising a conjugated polymer having conjugated unsaturation along a main backbone chain thereof, said polymer being electrochemically oxidizable to a p-type doped material and electrochemically reducible to an n-type doped material;

an electrolyte in contact with said catalyst electrode comprising

a protic solvent, and

at least one ionic dopant capable of doping said polymer to a conductive state in the electrolyte; and

second electrode means in contact with the electrolyte.

41. The cell of claim 40 wherein said solvent comprises water.

42. The cell of claim 40 wherein said solvent comprises at least one alcohol or amine.

43. The cell of claim 40 wherein said electrolyte comprises a material capable of participating in an oxidation-reduction reaction with the polymer.

44. The cell of claim 40 wherein said dopant is capable of participating in an oxidation-reduction reaction with the polymer.

45. The cell of claim 40 wherein said polymer comprises at least one polyacetylene.

46. The cell of claim 40 wherein said polymer comprises at least one polyphenylene.

47. The cell of claim 40 wherein said dopant comprises a chemical group selected from the group consisting of halide ions, polyhalide ions, $ClO_4$, $PF_6$, $HSO_4$, $AsF_6$, $AsF_4$, $SO_3CF_3$, and $BF_4$.

48. The cell of claim 40 wherein said second electrode means comprises the fuel.

49. The cell of claim 48 wherein said second electrode means comprises a metal.

50. The cell of claim 48 wherein said second electrode means comprises lead.

51. The cell of claim 50 wherein said oxidizing agent comprises perchlorate.

52. The cell of claim 40 wherein said second electrode means comprises said oxidizing agent.

53. The cell of claim 40 wherein said fuel and said oxidizing agent comprises said dopant.

54. The cell of claim 40 which is substantially reversible.

55. The cell of claim 40 wherein each of said electrodes comprises a portion of a unitary mass of said polymer.

56. The cell of claim 40 wherein said fuel comprises an organic material.

57. The cell of claim 40 wherein said fuel comprises hydrazine.

58. The cell of claim 40 wherein said oxidizing agent comprises oxygen.

59. An electrochemical method for modifying the electrical conductivity of an organic polymer comprising

providing an electrochemical cell comprising

an anode,

a cathode,

at least one of said electrodes comprising a conjugated polymer having conjugated unsaturation along a main backbone chain thereof, said polymer being electrochemically oxidizable to a p-type doped material and electrochemically reducible to an n-type doped material; and

an electrolyte comprising a protic solvent and at least one ionic dopant capable of doping the polymer to a conductive state in said electrolyte;

and passing current through the cell to effect said doping of the polymer to a more highly conducting state, said doping being substantially reversible.

60. The method of claim 59 wherein said solvent comprises water.

61. The method of claim 59 wherein said solvent comprises at least one alcohol or amine.

62. The method of claim 59 wherein said dopant is capable of participating in an oxidation-reduction reaction with said polymer.

63. The method of claim 59 wherein said polymer comprises at least one polyacetylene.

64. The method of claim 59 wherein said polymer comprises at least one polyphenylene.

65. The method of claim 59 wherein said dopant comprises a chemical group selected from the group consisting of halide ions, polyhalide ions, $ClO_4$, $PF_6$, $HSO_4$, $AsF_6$, $AsF_4$, $SO_3CF_3$, and $BF_4$.

66. The method of claim 59 wherein said dopant comprises a cation of a metal whose Pauling electronegativity is less than about 1.6 or an organic cation selected from the group consisting of $(R_{4-x}MH_x)^+$ and $R_3E^+$ where R is alkyl or aryl; M is N, P or As; E is O or S; and X is an integer from 0 to 4.

67. The method of claim 65 wherein said dopant further comprises a cation of a metal whose Pauling electronegativity is less than about 1.6 or an organic cation selected from the group consisting of $(R_{4-x}MH_x)^+$ and $R_3E^+$ where R is alkyl or aryl; M is N, P, or As; E is O or S; and X is an integer from 0 to 4.

68. The method of claim 66 wherein said metal comprises an alkali metal.

69. The method of claim 66 wherein said metal comprises lithium.

70. The method of claim 67 wherein said metal comprises an alkali metal.

71. The method of claim 59 wherein each of said electrodes comprises a conjugated polymer having conjugated unsaturation along a main backbone chain thereof, said polymer being electrochemically oxidizable to a p-type doped material and electrochemically reducible to an n-type doped material.

72. The method of claim 59 wherein at least one of the polymer electrodes has been doped chemically to a conductive state by a dopant species.

73. An electrochemical method for modifying the electrical conductivity of an organic polymer comprising

providing an electrochemical cell comprising

an anode,

a cathode, and

an electrolyte

each of said anode and cathode comprising a conjugated polymer having conjugated unsaturation along a main backbone chain thereof, said polymer being electrochemically oxidizable to a p-type doped material and electrochemically reducible to an n-type doped material;

said electrolyte comprising a protic solvent and at least one ionic dopant capable of doping said polymer to a conductive state in said electrolyte; and

passing current through the cell to effect oxidation of the cathode polymer with said dopant to an oxidized state as compared with the anode polymer.

74. An electrochemical method for modifying the electrical conductivity of an organic polymer comprising

providing an electrochemical cell comprising

an anode;

a cathode, and

an electrolyte

each of said anode and cathode comprising a conjugated polymer having conjugated unsaturation along a main backbone chain thereof, said polymer being electrochemically oxidizable to a p-type doped material and electrochemically reducible to an n-type doped material;

said electrolyte comprising a protic solvent and at least one ionic dopant capable of doping said polymer to a conductive state in said electrolyte; and

passing current through the cell to effect electrochemical reduction of the anode polymer with said dopant to a reduced state as compared with the cathode polymer.

75. A method for the electrochemical generation of electric current comprising

providing an electrochemical cell comprising

an electrochemically oxidizable fuel;

an electrochemically reducible oxidizing agent;

an electrolyte;

catalyst electrode means in contact with the electrolyte comprising a conjugated polymer having conjugated unsaturation along a main backbone chain thereof, said polymer being electrochemically oxidizable to a p-type doped material and electrochemically reducible to an n-type doped material;

said electrolyte comprising

a protic solvent, and

an ionic dopant capable of doping said polymer to a conducting state in the electrolyte; and

second electrode means in contact with the electrolyte; and

operating the cell to effect at least a partial electrochemical oxidation of said fuel and at least a partial electrochemical reduction of said oxidizing agent.

76. The method of claim 75 wherein said solvent comprises water.

77. The method of claim 75 wherein said solvent comprises at least one alcohol or amine.

78. The method of claim 75 wherein said dopant is capable of participating in an oxidation-reaction with the polymer.

79. The method of claim 75 wherein said polymer comprises at least one polyacetylene.

80. The method of claim 75 wherein said polymer comprises at least one polyphenylene.

81. The method of claim 75 wherein said dopant comprises a chemical group selected from the group consisting of halide ions, polyhalide ions, $ClO_4$, $PF_6$, $HSO_4$, $AsF_6$, $AsF_4$, $SO_3CF_3$, and $BF_4$.

82. The method of claim 77 wherein said second electrode means comprises the fuel.

83. The method of claim 82 wherein said second electrode means comprises a metal.

84. The method of claim 82 wherein said second electrode means comprises lead.

85. The method of claim 82 wherein said oxidizing agent comprises perchlorate.

86. The method of claim 75 wherein said fuel comprises an organic material.

87. The method of claim 75 wherein said fuel comprises hydrazine.

88. The method of claim 75 wherein said oxidizing agent comprises oxygen.

89. The method of claim 82 wherein said second electrode means comprises lead and each of said dopant and said oxidizing agent comprises perchlorate.

90. The method of claim 75 wherein said second electrode means comprises said oxidizing agent.

91. The method of claim 75 which is substantially reversible.

92. A method for modifying the electrical conductivity of an organic polymer comprising

providing an anode, and

a cathode, at least one of said electrodes comprising a conjugated polymer having conjugated unsaturation along a main backbone chain thereof, said polymer being electrochemically oxidizable to a p-type doped material and electrochemically reducible to an n-type doped material, and

contacting said polymer with an electrolyte comprising

a protic solvent,

at least one ionic dopant capable of doping said polymer to a conductive state in the electrolyte, and

a material capable of participating in an oxidation-reduction reaction with the polymer.

93. The method of claim 92 wherein said solvent comprises water.

94. The method of claim 92 wherein said solvent comprises at least one alcohol or amine.

95. The method of claim 92 wherein said polymer comprises at least one polyacetylene.

96. The method of claim 92 wherein said polymer comprises at least one polyphenylene.

97. The method of claim 92 wherein said material is an oxidizing acid.

98. The method of claim 97 wherein said material comprises said dopant.

99. The method of claim 92 wherein said material is a reducing base.

100. The method of claim 99 wherein said material comprises said dopant.

101. The method of claim 92 wherein said material is a gas.

102. The method of claim 92 wherein each of said electrodes comprises said polymer.

103. The method of claim 102 wherein each of said electrodes is contacted with different material capable of participating in an oxidation-reduction reaction with said polymers.

104. The method of claim 103 wherein each of said materials is a gas.

105. The method of claim 102 wherein each of said electrodes comprises a portion of a unitary mass of said polymer.

FIG.1

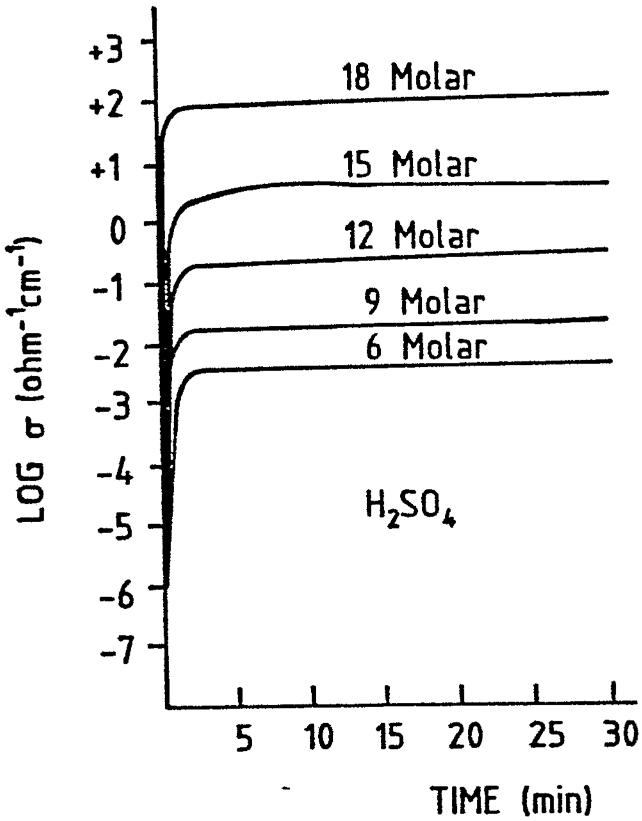
+3
+2
+1
0
-1
-2
-3
-4
-5
-6
-7
LOG σ (ohm⁻¹cm⁻¹)
18 Molar
15 Molar
12 Molar
9 Molar
6 Molar
$H_2SO_4$
5
10
15
20
25
30
TIME (min)

FIG.2

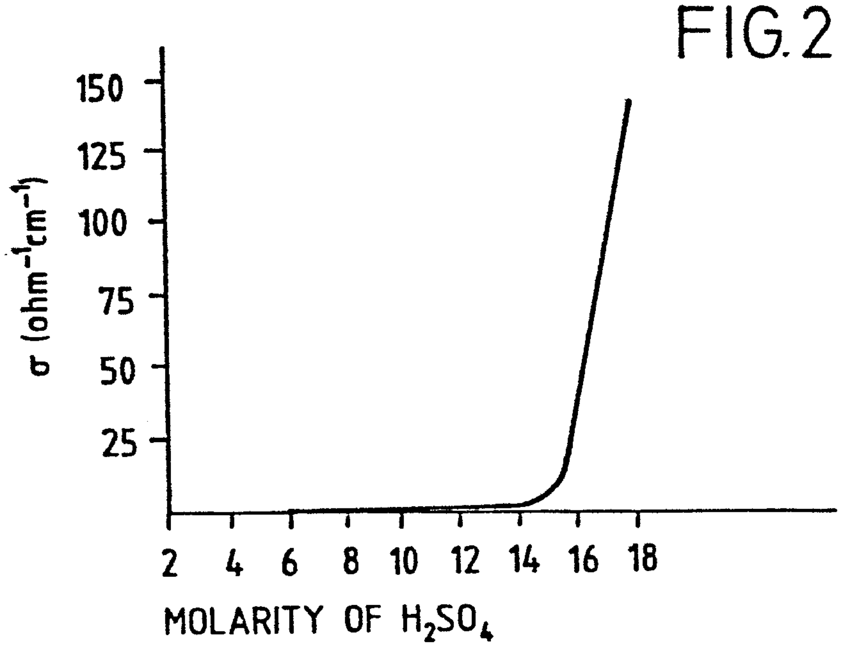
150
125
100
75
50
25
σ (ohm⁻¹cm⁻¹)
2
4
6
8
10
12
14
16
18
MOLARITY OF $H_2SO_4$

FIG.3

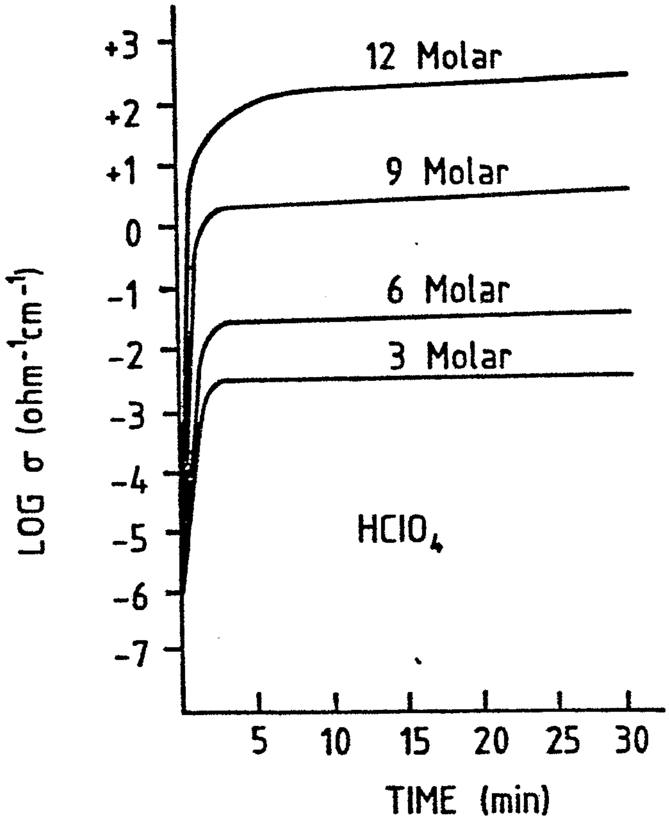
+3
+2
+1
0
-1
-2
-3
-4
-5
-6
-7
LOG σ (ohm-1cm-1)
12 Molar
9 Molar
6 Molar
3 Molar
HClO4
5
10
15
20
25
30
TIME (min)

FIG.4

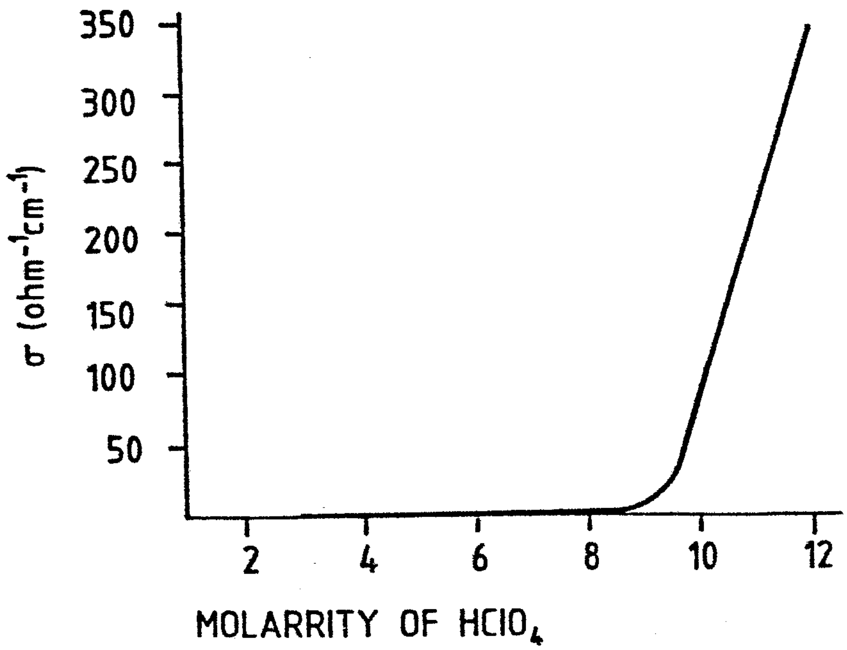
350
300
250
200
150
100
50
σ (ohm-1cm-1)
2
4
6
8
10
12
MOLARRITY OF HClO4

European Patent Office

**0131829**

Application number

# EUROPEAN SEARCH REPORT

| DOCUMENTS CONSIDERED TO BE RELEVANT | | | EP 84107618.5 |
|---|---|---|---|
| **Category** | **Citation of document with indication, where appropriate, of relevant passages** | **Relevant to claim** | **CLASSIFICATION OF THE APPLICATION (Int Cl 4)** |
| A,P | EP - A2 - 0 111 237 (BASF)<br>* Claims 1,2,19,20 *<br>-- | 1,2,4-9,13-16,28-35,37,38,59,60,62-76,78-81,92,93,95 | H 01 M 10/36<br>H 01 M 8/08<br>C 25 B 3/00<br>H 01 B 1/12<br>H 01 L 29/28 |
| D,A | US - A - 4 321 114 (MACDIARMID et al.)<br>* Abstract; claims 1,5,6,8,13, 20; column 7, lines 33-38; table I *<br>-- | 1-39, 59-74, 92-105 | |
| D,A | US - A - 4 222 903 (HEEGER et al.)<br>* Claims 1-3 *<br>-- | 59,73-75,92 | |
| | | | **TECHNICAL FIELDS SEARCHED (Int Cl 4)** |
| D,A | US - A - 4 204 216 (HEEGER et al.)<br>* Abstract *<br>-- | 59,73-75,92 | H 01 M<br>H 01 B<br>H 01 L<br>C 25 B |
| D,A | JOURNAL OF THE CHEMICAL SOCIETY - CHEMICAL COMMUNICATIONS, vol. 1, 1979<br>P.J. NIGREY et al. "Electrochemistry of Polyacetylene" pages 594-595<br>-- | 59,73-75,92 | |
| D,A | SYNTHETIC METALS, vol. 1, 1979, Lausanne<br>A.G. MAC DIARMID, A.J. HEEGER, "Organic Metals and Semiconductors" pages 101-118<br>* Pages 103-114 *<br>---- | 59,73-75,92 | |

The present search report has been drawn up for all claims

| Place of search | Date of completion of the search | Examiner |
|---|---|---|
| VIENNA | 12-10-1984 | LUX |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82